# EUROPEAN PATENT SPECIFICATION

(11) **EP 1 672 247 B1**
(45) Date of publication and mention of the grant of the patent: **15.10.2008**
(21) Application number: 05112268.7
(22) Date of filing: 15.12.2005
(51) Int. Cl.: F16H 37/06, H02K 49/10

(54) **Mechanical transmission for aeronautical applications**
Mechanisches Getriebe für aeronautische Anwendungen
Transmission mécanique pour des applications aéronautiques

(30) Priority: 17.12.2004 IT TO20040887
(43) Date of publication of application: 21.06.2006
(73) Proprietor: AVIO S.p.A., 10135 Torino (IT)
(72) Inventor: Cocco, Marco, 10136 Torino (IT); Oddone, Giovanni, 15077 Predosa (IT)
(74) Representative: Jorio, Paolo

(56) References cited:
- EP-A- 0 408 093
- DE-U1- 29 500 108
- FR-A- 2 461 171
- US-A- 3 038 352

## Description

The present invention relates to a mechanical transmission for aeronautical applications.

In the aeronautical sector, the propulsive action generated by the main propulsion unit, normally a thermal engine, is transmitted to the various user appliances by means of a kinematic chain, normally of the type comprising gears.

So as to allow operation of the user appliances or some of them when the main propulsion unit is switched off, an auxiliary actuating device, known as a "low-speed" actuating device, arranged in parallel with the main propulsion unit, is generally envisaged.

The known auxiliary actuating devices comprise an axial seat formed on an end section of one of the shafts of the kinematic chain, and an external actuating head which, when low-speed operation is required, is inserted inside the seat and rotated manually by means of a crank or by means of a dedicated electrical or pneumatic actuator.

The known solutions of the type described above, although used, are not very satisfactory both in terms of practicality of use and in terms of safety, and require continuous maintenance.

The above essentially arises from the fact that, in order to insert the actuating head inside the associated seat, it is necessary to remove a cover which closes the casing in a fluid-tight manner, which cover, once operation has ended, must be reassembled so as to prevent the oil lubricating the kinematic chain from escaping. In order to prevent the lubricating oil from escaping during rotation of the pivot pin, it is envisaged mounting a sealing gasket on the shaft which has the seat. This gasket, in addition to increasing the manufacturing costs, requires special lubrication, continuous checking and must be replaced periodically.

The object of the present invention is to provide a mechanical transmission for aeronautical applications which is able to solve in a simple manner the abovementioned problems and in particular allows low-speed operation without the need for removal of parts of the external casing and which, at the same time, is simple and inexpensive to produce and extremely efficient and reliable from a functional point of view.

FR-A-2 461 171 shows all features of the preamble of claim 1.

According to the present invention a mechanical transmission for aeronautical applications is provided, said transmission comprising: an external casing; a main power input shaft able to be actuated by a main propulsion unit and a secondary power input shaft which are housed inside the said casing; and auxiliary actuating means which can be coupled to the said secondary shaft in a releasable manner so as to rotate the said secondary shaft when the main propulsion unit is inactive, the said auxiliary actuating means comprising an external actuating head and means for angularly coupling the said actuating head to the said secondary shaft, characterized in that the said angular coupling means comprise first magnetic means coupled to the said secondary shaft in an angularly fixed position and second magnetic means mounted on the said actuating head.

Preferably, the mechanical transmission described above also comprises a cover arranged so as to close a side opening of the said casing, the cover being positioned between the said secondary shaft and the said actuating head so as to close the casing in a fluid-tight manner also during actuation of the said secondary shaft by means of the said external actuating head.

Preferably, moreover, the said first and second magnetic means comprise at least one first and at least one second magnet at least partially facing each other.

The invention will now be described with reference to the accompanying figures which illustrate a non-limiting example of embodiment thereof and where:
Figures 1 and 2 show a partially sectioned view of a mechanical transmission for aeronautical applications constructed in accordance with the principles of the present invention, shown in two different operating conditions; and
Figure 3 shows a cross-section, on a much larger scale, along the line II-II of Figure 2.

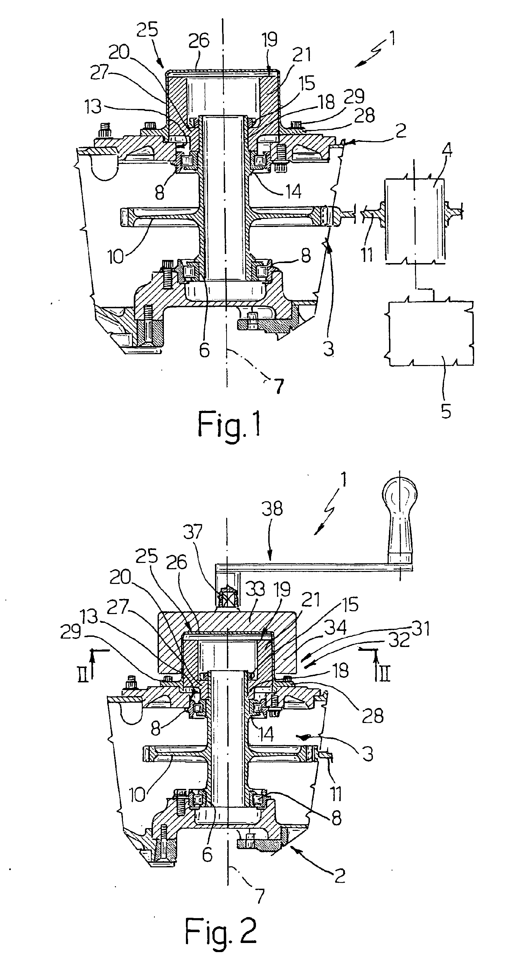

In Figure 1, 1 denotes overall a mechanical transmission for aeronautical applications. The transmission 1 comprises an external casing 2 with the function of a support frame, which casing is permanently closed in a fluid-tight manner and houses a kinematic chain 3 which is partially shown. The kinematic chain 3, which is of the type known *per se,* comprises a main driving shaft 4 for inputting the power, connected, again in manner known per se, to a main actuating motor 5, and a secondary actuating shaft 6, which is rotatable about a fixed axis 7 of symmetry, supported by a pair of bearings 8, and is connected angularly to the main shaft 4 by means of a pair of gear wheels indicated by 10 and 11. The secondary shaft 6 extends through a side opening 13 in the casing 2 and is provided with an external fixed lateral flange 14 against which, by means of a ring 15 screwed onto a terminal section 6a of the secondary shaft 6, the internal race of the associated bearing 8 and a terminal collar 18 of an annular cup-shaped body 19 forming the axial extension of the secondary shaft 6 are clamped in pack form.

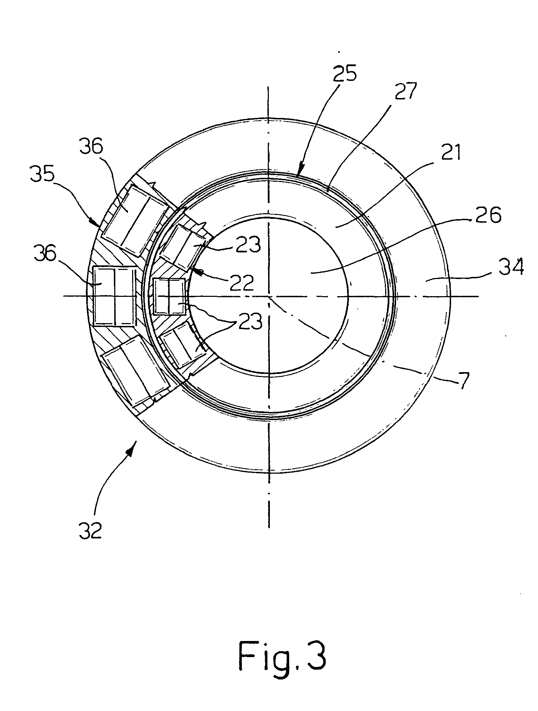

The cup-shaped body 19 has an annular end wall 20, against which the ring 15 presses, and a side wall 21 which extends through the opening 13. The side wall 21 is hollow and houses a ring 22 of permanent magnets 23 which are equally spaced and locked inside the said side wall 21 in fixed positions, as shown in Figure 3. According to a variant, not shown, the ring 22 of magnets 23 is replaced by a single magnet or by a pair of diametrically opposite magnets.

Still with reference to Figures 1 and 2, the cup-shaped body 19 extends inside a hollow cover 25 which forms part of the casing 2 and which closes the opening 13 in a fluid-tight manner. The hollow cover 25 has, in particular, an end wall 26 perpendicular to the axis 7 and a cylindrical side wall 27 which extends coaxially with respect to the axis 7, surrounds the side wall 21 with radial play and terminates in an external radial flange 28 connected to the casing 2 by means of a plurality of screws 29.

The side wall 27 defines a reference pivot for a removable, hollow, actuating head 31 which extends outside the casing 2 and is coupled to the walls 26 and 27 in a manner rotatable about the axis 7.

The hollow head 31 forms, together with the cup-shaped body 19 and the ring 22 of magnets 23, part of a magnetic device 32 (Figures 2 and 3) for actuating the kinematic chain 3 at low speed. The magnetic device 32 is arranged parallel to the main motor 5 so as to allow an operator to rotate, in the case in question manually, the secondary shaft 6 when not actuated by the said main motor 5.

In the particular example described, the head 31 has the form of an overturned cup, surrounds the cover 25 and comprises an end wall 33 facing and situated at a distance from the wall 26 of the cover 25 and a side wall 34 surrounding the wall 27 with radial play. The side wall 34 has an internal seat inside which a ring 35 of permanent magnets 36 coaxial with and outside the ring 22 of magnets 23 is arranged and locked in a fixed position, as shown in Figure 3. According to a variant not shown, the ring 35 of magnets is replaced by a single magnet or by a pair of magnets arranged diametrically opposite each other.

Still with reference to Figure 3, the head 31 is provided with an external fastening pin 37 which extends from the wall 33 coaxially with respect to the axis 7 and to which, in the particular example described, a crank 38 is coupled in an angularly fixed manner, said crank allowing the operator to rotate manually the said head 31. Alternatively, the crank 38 is replaced by an electric, hydraulic or pneumatic actuator, a spindle of which is able to be coupled to the pin 37.

During use, when the kinematic chain 3 must be driven at low speed, namely when the main motor 5 is inactive, the operator simply couples the head 31 to the cover 25 and rotates it manually by means of the crank 38 or by means of any other actuator. Following coupling of the head 31 to the cover 25, since the cover 25 is pervious to the magnetic fields produced by the magnets 23 and 36, a magnetic angular coupling is established between the two rings 22 and 35 of magnets and therefore between the head 31 and the secondary shaft 6 so that the secondary shaft 6, following rotation of the head 31, is driven rotationally about the axis 7.

From the above it is obvious how the use of a magnetic device 32 for actuation of the kinematic chain 3 in low speed mode allows, above all, the provision of an external casing 2 which is permanently leakproof. This is due essentially to the fact that, also during low-speed operation, no part of the external casing 2 must be removed with respect to the condition where operation occurs by means of the main motor. Consequently, compared to the known solutions, the problems associated with loss of lubrication fluid are totally eliminated and it is no longer necessary to provide special sealing gaskets requiring continuous maintenance and periodic replacement, with an obvious reduction in costs.

The magnetic device 32 described is, moreover, relatively simple from a constructional point of view, unaffected by external agents and therefore does not require maintenance operations.

From the above it is obvious that the transmission 1 described may be subject to modifications and variations which do not depart from the protective scope of the present invention. In particular, it is obvious that the magnetic device 32 may be used, independently of the type of main motor and could comprise magnets different from those indicated by way of example and chosen depending on the actuating torque to be transmitted from the outside.

Finally, the head 31 could have constructional features different from those described by way of example and/or be coupled to the casing in a manner different from that indicated.

## Claims

1. Mechanical transmission (1) for aeronautical applications, comprising an external casing (2); a main power input shaft (4) able to be actuated by a main propulsion unit (5) and a secondary power input shaft (6) which are housed inside the said casing (2); and auxiliary actuating means (32) which can be coupled to the said secondary shaft in a releasable manner so as to rotate the said secondary shaft when the main propulsion unit is inactive, **characterised in that** said auxiliary actuating means (32) comprises an external actuating head (31) and means for angularly coupling the said actuating head to the said secondary shaft (6), and **in that** the said angular coupling means comprise first magnetic means (23) coupled to the said secondary shaft (6) in an angularly fixed position and second magnetic means (36) are mounted on the said actuating head (31).

2. Transmission according to Claim 1, **characterized in that** it also comprises a cover (25) arranged so as to close a side opening (13) of the said casing, the cover (25) being positioned between the said secondary shaft (6) and the said actuating head (31) so as to close the casing in a fluid-tight manner also during actuation of the said secondary shaft by means of the said external actuating head.

3. Transmission according to Claim 1 or 2, **characterized in that** the said external casing comprises reference means (25) for the said external actuating head (31).

4. Transmission according to Claim 3, **characterized in that** the said external head can be coupled to the said reference means (25) in a removable manner.

5. Transmission according to Claim 3 or 4, **characterized in that** the said reference means comprise a cylindrical portion (27) projecting from the said casing (2).

6. Transmission according to Claim 5, **characterized in that** the said cylindrical portion (27) is a removable portion.

7. Transmission according to any one of the preceding claims, **characterized in that** the said first and second magnetic means comprise at least one first (23) and at least one second magnet (36) at least partially facing each other.

8. Transmission according to Claim 7, **characterized in that** the said first and second magnetic means comprise a first ring (22) and a second ring (35) of magnets, respectively, which are arranged coaxial with each other and one at least partially inside the other one.

9. Transmission according to Claim 8, **characterized in that** the said first ring (22) of magnets is permanently inserted inside an annular support body (19) integrally connected to one end of the said secondary shaft (6) and the said second ring (35) of magnets is permanently inserted inside a housing of the said external actuating head (31).

10. Transmission according to any one of the preceding claims, **characterized in that** the said first and second magnetic means comprise permanent magnets.

## Patentansprüche

1. Mechanisches Getriebe (1) für Luftfahrt-Anwendungen, das ein Außengehäuse (2), eine Hauptantriebswelle (4), die durch eine Hauptvortriebseinheit (5) und eine sekundäre Antriebswelle (6) betätigt werden kann, die beide im Inneren des Gehäuses (2) angeordnet sind, sowie Zusatzbetätigungsmittel (32) umfasst, die lösbar an die sekundäre Antriebswelle gekoppelt werden können, so dass sie die sekundäre Antriebswelle drehen, wenn die Hauptvortriebseinheit außer Betrieb ist, **dadurch gekennzeichnet, dass** die Zusatzbetätigungsmittel (32) einen äußeren Betätigungskopf (31) und Mittel zur Winkelkopplung des Betätigungskopfes mit der sekundären Antriebswelle (6) umfassen und dass die Mittel zur Winkelkopplung erste magnetische Mittel (23) umfassen, die mit der sekundären Antriebswelle (6) in feststehender Winkelstellung gekoppelt sind, sowie zweite magnetische Mittel (36), die auf dem Betätigungskopf (31) montiert sind.

2. Getriebe nach Anspruch 1, **dadurch gekennzeichnet, dass** es außerdem eine Abdeckung (25) umfasst, die derart angeordnet ist, dass sie eine Seitenöffnung (13) des Gehäuses verschließt, wobei die Abdeckung (25) zwischen der sekundären Antriebswelle (6) und dem Betätigungskopf (31) derart angeordnet ist, dass das Gehäuse auch während des Betätigens der sekundären Antriebswelle mit Hilfe des äußeren Betätigungskopfes fluiddicht verschlossen ist.

3. Getriebe nach Anspruch 1 oder 2, **dadurch gekennzeichnet, dass** das Außengehäuse Referenzmittel (25) für den äußeren Betätigungskopf (31) umfasst.

4. Getriebe nach Anspruch 3, **dadurch gekennzeichnet, dass** der äußere Kopf entfernbar an die Referenzmittel (25) gekoppelt werden kann.

5. Getriebe nach Anspruch 3 oder 4, **dadurch gekennzeichnet, dass** die Referenzmittel ein zylindrisches Teil (27) umfassen, das aus dem Gehäuse (2) hervorragt.

6. Getriebe nach Anspruch 5, **dadurch gekennzeichnet, dass** das zylindrische Teil (27) ein entfernbares Teil ist.

7. Getriebe nach einem der vorhergehenden Ansprüche, **dadurch gekennzeichnet, dass** die ersten und die zweiten magnetischen Mittel mindestens einen ersten (23) und mindestens einen zweiten Magneten (36) umfassen, die sich mindestens teilweise gegenüberliegen.

8. Getriebe nach Anspruch 7, **dadurch gekennzeichnet, dass** die ersten und die zweiten magnetischen Mittel einen ersten Ring (22) beziehungsweise einen zweiten Ring (35) aus Magneten umfassen, die koaxial zueinander angeordnet sind und einer mindestens teilweise im anderen angeordnet ist.

9. Getriebe nach Anspruch 8, **dadurch gekennzeichnet, dass** der erste Ring (22) aus Magneten dauerhaft in das Innere eines ringförmigen Stützkörpers (19) eingesetzt ist, der einstückig mit einem Ende der sekundären Antriebswelle (6) verbunden ist, und der zweite Ring (35) aus Magneten dauerhaft in das Innere eines Gehäuses des äußeren Betätigungskopfes (31) eingesetzt ist.

10. Getriebe nach einem der vorhergehenden Ansprüche, **dadurch gekennzeichnet, dass** die ersten und die zweiten magnetischen Mittel Permanentmagneten umfassen.

## Revendications

1. Transmission mécanique (1) pour applications aéronautiques, comprenant un boîtier externe (2) ; un arbre d'entrée moteur principal (4) pouvant être actionné par une unité de propulsion principale (5) et un arbre d'entrée moteur auxiliaire (6) qui sont logés à l'intérieur dudit boîtier (2) ; et des moyens d'actionnement auxiliaires (32) qui peuvent être couplés audit arbre auxiliaire d'une manière libérable afin de faire tourner ledit arbre auxiliaire quand l'unité de propulsion principale est inactive, **caractérisée en ce que** lesdits moyens d'actionnement auxiliaires (32) comprennent une tête d'actionnement externe (31) et des moyens de couplage angulaire de ladite tête d'actionnement audit arbre auxiliaire (6) et **en ce que** lesdits moyens de couplage angulaire comprennent des premiers moyens magnétiques (23) couplés audit arbre auxiliaire (6) dans une position angulairement fixe et des seconds moyens magnétiques (36) sont montés sur ladite tête d'actionnement (31).

2. Transmission selon la revendication 1, **caractérisée en ce qu'**elle comprend aussi un capot (25) disposé afin de fermer un côté ouvrant (13) dudit boîtier, le capot (25) étant positionné entre ledit arbre auxiliaire (6) et ladite tête d'actionnement (31) de façon à fermer le boîtier de manière hermétique, également, pendant l'actionnement dudit arbre auxiliaire au moyen de ladite tête d'actionnement externe.

3. Transmission selon la revendication 1 ou 2, **caractérisée en ce que** ledit boîtier externe comprend des moyens de référence (25) pour ladite tête d'actionnement externe (31).

4. Transmission selon la revendication 3, **caractérisée en ce que** ladite tête externe peut être couplée auxdits moyens de référence (25) de manière amovible.

5. Transmission selon la revendication 3 ou 4, **caractérisée en ce que** lesdits moyens de référence comprennent une partie cylindrique (27) faisant saillie depuis ledit boîtier (2).

6. Transmission selon la revendication 5, **caractérisée en ce que** ladite partie cylindrique (27) est une partie amovible.

7. Transmission selon l'une quelconque des revendications précédentes, **caractérisée en ce que** lesdits premier et second moyens magnétiques comprennent au moins un premier (23) et au moins un second aimants (36) se faisant face au moins partiellement.

8. Transmission selon la revendication 7, **caractérisée en ce que** lesdits premier et second moyens magnétiques comprennent une première bague (22) et une seconde bague (35) d'aimants, respectivement, qui sont disposées de façon coaxiale l'une par rapport à l'autre et au moins partiellement l'une à l'intérieur de l'autre.

9. Transmission selon la revendication 8, **caractérisée en ce que** ladite première bague (22) d'aimants est de manière permanente insérée à l'intérieur d'un corps de support annulaire (19) raccordé d'une pièce à une extrémité dudit arbre auxiliaire (6) et ladite seconde bague (35) d'aimants est de manière permanente insérée à l'intérieur d'un logement de ladite tête d'actionnement externe (31).

10. Transmission selon l'une quelconque des revendications précédentes, **caractérisée en ce que** lesdits premier et second moyens magnétiques comprennent des aimants permanents.
